Europäisches Patentamt

European Patent Office

Office européen des brevets

(11) Veröffentlichungsnummer: **0 444 309 A2**

# (12) EUROPÄISCHE PATENTANMELDUNG

(21) Anmeldenummer: **90125441.7**

(22) Anmeldetag: **24.12.90**

(51) Int. Cl.5: **G03B 27/58**

(30) Priorität: **01.03.90 DE 9002409 U**

(43) Veröffentlichungstag der Anmeldung:
**04.09.91 Patentblatt 91/36**

(84) Benannte Vertragsstaaten:
**BE DE FR GB IT SE**

(71) Anmelder: **DU PONT DE NEMOURS (DEUTSCHLAND) GMBH**
**Du Pont Strasse 1**
**W-6380 Bad Homburg(DE)**

(72) Erfinder: **Loewe, Erhard**
**Röderwiese 22**
**W-5401 Waldesch(DE)**
Erfinder: **Urban, Otfried**
**Wilhelm-Kopp-Strasse 2/Rheinufer**
**W-6200 Wiesbaden-Biebrich(DE)**

(54) **Lichtdichte Kassette.**

(57) Es wird eine lichtdichte Kassette für eine Spule mit bahnförmigem, lichtempfindlichen Material angegeben, die aus einem lichtdichten Gehäuse, besteht, das mit einem Filmaustritts-Schlitz versehen ist, der parallel zur Spulenachse verläuft; die Spule ist an den Stirnwänden des Kassettengehäuses gelagert und besteht aus einem Kern, auf den das Filmmaterial aufgewickelt ist sowie seitlichen Bordscheiben, die die Filmrolle mittig in der Kassette halten.

Um zu verhindern, daß sich der Film während des Transportes und der Lagerung von selbst aufrollt ist erfindungsgemäß eine von außen zu betätigende Bremsvorrichtung vorgesehen, die an einer oder an beiden Stirnseiten der Kassette einen verstellbaren Reibschluß zwischen der Stirnwand und der Bordscheibe der Fimspule bewirkt und diese somit fixiert.

Fig.3

EP 0 444 309 A2

Die Neuerung betrifft eine lichtdichte Kassette mit einem Wickel aus bahnförmigem Material, deren Gehäuse eine den Umfang des Wickels umgebende Gehäusewand und zwei durch die Gehäusewand verbundene Stirnseitenwände an den Stirnseiten aufweist, in denen der Wickel drehbar gelagert ist.

Bei dem bahnförmigen Material handelt es sich in der Regel um lichtempfindliche Filme oder Papier, die in einem Belichtungsgerät zur Reproduktion von Vorlagen oder zur Erzeugung von Negativen für die Belichtung von Druckplatten benötigt werden. Bei derartigen Kassetten sind im allgemeinen zwei gegensätzliche Forderungen zu erfüllen. Zum einen muß der Wickel möglichst reibungsarm gelagert sein, um einen leichten und damit gleichmäßigen Filmtransport im Belichtungsgerät zu gewährleisten. Das ist besonders wichtig in solchen Anwendungsfällen, in denen, wie z.B. bei bestimmten Scannern, die Belichtung des Filmes während seines Transports erfolgt. Jede Ungleichmäßigkeit in der Transportgeschwindigkeit hätte Verzerrungen im belichteten Bild auf dem Film zur Folge. Zum anderen darf sich aber das bahnförmige Material, d.h. das Filmmaterial, während des Transports der Kassette außerhalb des Belichtungsgerätes oder während der Lagerung der Kassette nicht von selbst aufrollen oder aufdrallen, was aber umso leichter geschieht, je geringer die Lagerreibung ist. Beim Aufdrallen besteht die Gefahr, daß der Film mit der Innenseite der Gehäusewand in Berührung kommt und dort verkratzt.

Bei einer bekannten Kassette (US-PS 3 612 424) ist der Wickel in der Kassette auf einer durchgehenden Achse gelagert, die die beiden Stirnseitenwände miteinander verbindet. Die Achse ist dabei durch eine Stirnseitenwand hindurchgeführt und kann dort mit einer Mutter versehen werden. Durch Anziehen der Mutter werden die Stirnseitenwände aufeinander zu bewegt und klemmen den Wickel zwischen sich ein. Nach Lösen der Mutter entfernen sich die Stirnseitenwände wieder voneinander und der Wickel wird dann freier beweglich. Diese Konstruktion hat den Nachteil eines relativ großen Fertigungsaufwandes. Sie läßt sich nur dann verwenden, wenn eine durchgehende Achse vorhanden ist, die die beiden Stirnseitenwände miteinander verbindet. Darüber hinaus werden durch das Anziehen der Mutter Spannungen im Gehäuse, insbesondere in der Gehäusewand, erzeugt, die einzelne Gehäuseteile verformen können, z.B. die Gehäusewand nach außen biegen können. Durch die Verformung können Spalte an den Berührungsstellen oder Trennfugen zwischen einzelnen Kassettenteilen entstehen, die Licht in das Innere der Kassette eintreten lassen. Dies ist aber insbesondere bei Kassetten für lichtempfindliches Material unerwünscht.

Aus DE-OS 21 66 321 ist es bekannt, einen Filmwickel permanent auf beiden Stirnseiten einzuklemmen, so daß der Filmwickel nur gegen einen vorbestimmten, durch die Klemmung bestimmten Widerstand abgewickelt werden kann. Hierbei ist mit kleiner werdendem Radius des Wickels eine immer größere Kraft erforderlich, um den Film mit gleichmäßiger Geschwindigkeit abwickeln zu können. In jedem Fall ist eine zum Teil erhebliche Reibung zu überwinden.

Bei einer aus EP-PS 53 856 bekannten Aufdrall-Sicherung ist ein Arretierungsstift vorgesehen, der beim erstmaligen Abwickeln des Filmes zerstört wird. Es handelt sich also hier nur um eine reine Transportsicherung, die vor der Benutzung irreversibel aufgebrochen wird. Soll die Kassette danach wieder gesichert werden, weil beispielsweise vor dem Verbrauch ihres gesamten Inhaltes mit einem anderen Filmmaterial weitergearbeitet werden muß, so besteht wiederum die Gefahr des Aufdrallens, die gerade dann besonders groß ist, wenn die Kassette nicht mehr ganz gefüllt ist.

Es ist die Aufgabe der vorliegenden Neuerung, eine lichtdichte Kassette anzugeben, die Schutz vor dem Aufdrallen des Wickels bietet und einfach herzustellen und anzuwenden ist.

Diese Aufgabe wird bei einer Kassette der eingangs genannten Art dadurch gelöst, daß an mindestens einer Stirnseite der Kassette eine von außen betätigbare Bremseinrichtung angeordnet ist, die in einem vorbestimmten Winkelsegment einen verstellbaren Reibschluß zwischen der Stirnseitenwand und der zugehörigen Stirnseitenfläche des Wickels bewirkt.

Vor Gebrauch der Kassette wird die Bremseinrichtung gelöst, so daß der Reibschluß zwischen der Stirnseitenwand des Gehäuses und der Stirnseitenfläche des Wickels aufgehoben wird. Der Wickel kann dann abgewickelt werden, wobei lediglich die Lagerreibung des Wickels zu überwinden ist. Soll die Kassette transportiert werden, beispielsweise nach ihrer Herstellung oder, wenn im Belichtungsgerät ein Filmwechsel erforderlich ist, wird die Bremseinrichtung betätigt, so daß die Stirnseitenwand mit der Stirnseitenfläche in Reib-Eingriff kommt. Dies bedeutet nicht, daß der Wickel überhaupt nicht mehr zu drehen wäre. Die durch den Reibschluß aufgebrachte Kraft bzw. das Haltemoment muß lediglich so groß sein, daß sie der inneren Spannung des Wickels, die zum Aufdrallen führen würde, ein ausreichendes Gegenmoment entgegensetzt. Dadurch, daß die Bremseinrichtung nur in einem vorbestimmten Winkelsegment auf die Stirnseitenfläche des Wickels wirkt, werden Spannungen im Gehäuse weitgehend vermieden. Es ist nicht mehr notwendig, daß eine wie immer geartete Spannvorrichtung zwischen den beiden Stirnseitenwänden vorhanden ist, die auch die Gehäusewand verformen kann. Die Bremseinrichtung an der Stirnseitenwand arbeitet praktisch autark.

Mit Vorteil bewirkt die Bremseinrichtung den Reibschluß in einem Bereich zwischen einem vorbestimmten ersten und einem vorbestimmten zweiten Radius an der Stirnseitenfläche. Durch die Wahl des Bereichs läßt sich auf einfache Art und Weise das Bremsmoment bestimmen. Je weiter außen der Ort des Reibschlusses angeordnet ist, desto geringer muß die durch den Reibschluß aufgebrachte Kraft sein, um ein vorbestimmtes Bremsmoment zu erzeugen. Darüber hinaus ist es damit nur noch notwendig, auch in Radialrichtung einen relativ geringen Bereich der Stirnseite zu verformen, so daß Spannungen im Gehäuse weiter vermieden werden.

In einer bevorzugten Ausführungsform ist das Gehäuse zweiteilig ausgebildet und weist ein Oberteil und ein Unterteil auf, wobei Oberteil und Unterteil jeweils einen Teil der Gehäusewand und beider Stirnseitenflächen umfassen. Gerade bei dieser Ausführungsform zeigt sich der Vorteil der Neuerung. Dadurch, daß die beiden Stirnseitenwände nicht aufeinander zu bewegt werden müssen, besteht auch keine Gefahr, daß sich durch eventuelle Spannungen in der Gehäusewand ein Spalt bei der Trennfuge zwischen Oberteil und Unterteil, insbesondere im Filmaustrittsschlitz, ergibt. Andererseits läßt sich eine derartige Kassette leicht dadurch herstellen, daß in ein vorbereitetes Unterteil ein Wickel eingelegt und sodann das Oberteil aufgesetzt wird. Nach der Betätigung der Bremseinrichtung ist die Kassette transportbereit.

Mit Vorteil ist die Bremseinrichtung nur am Oberteil bzw. nur am Unterteil angeordnet. Dadurch, daß die Bremseinrichtung nur an einem der beiden Teile angeordnet ist, vereinfacht sich die Fertigung. Die Bremseinrichtung kann im Oberteil oder im Unterteil vorgefertigt werden. Beim Zusammenfügen von Oberteil und Unterteil müssen keine komplizierten Verbindungen für die Bremseinrichtung hergestellt werden.

Mit Vorteil weist die Bremseinrichtung ein Klemmelement auf, das in Schienen außen auf der Stirnseitenwand geführt ist und in einer vorbestimmten Lage einen zwischen den Schienen befindlichen Teil der Stirnseitenwand mit Druck beaufschlagt und nach innen biegt. Der mit Druck beaufschlagte Bereich der Stirnseitenwand weicht aufgrund des Drucks nach innen aus, so daß er mit der Stirnfläche des Wickels in Berührung kommt und mit diesem zusammen einen Reibschluß erzeugt. Der Bereich, der ausweichen muß, wird dadurch relativ klein gehalten. Dadurch werden Spannungen im Gehäuse von vornherein weitgehend vermieden.

Dabei ist es bevorzugt, daß die Stirnseitenwand zwischen den Schienen, insbesondere an dem Ort, wo sie durch das Klemmelement mit Druck beaufschlagt wird, mit verminderter Wandstärke ausgebildet ist. Dies erleichtert die Deformation durch den Druck.

Dabei ist es von Vorteil, daß die Stirnseitenwand auf ihrer Innenseite an dem Ort, wo sie durch das Klemmelement mit Druck beaufschlagt wird, einen Vorsprung aufweist. Durch den Vorsprung, der eine relativ kleine Fläche aufweist, die mit der Stirnfläche des Wickels in Berührung kommen kann, wird ermöglicht, daß der Druck, der durch das Klemmelement aufgebracht wird, in einen viel größeren Druck übersetzt wird, mit dem der Vorsprung auf die Stirnfläche des Wickels drückt. Bei Verwendung eines nachgiebigen Materials an der Stirnfläche des Wickels läßt sich damit praktisch ein Übergang von einem Reibschluß in einen Formschluß erreichen.

Um den Bremseingriff der Bremseinrichtung aufzuheben, kann das Klemmelement vollständig von der Kassette entfernt werden. Mit Vorteil ist es jedoch auch in eine Lage verschiebbar, in der es keinen Druck auf die Stirnseitenwand ausübt. Die Gefahr, daß das Klemmelement verloren geht, wird dadurch vermindert.

In einer bevorzugten Ausführungsform weist der Wickel zumindest auf der Seite, auf der die Bremseinrichtung angeordnet ist, eine Bordscheibe auf. Eine Bordscheibe ist eine Scheibe, die die Stirnseite des Wickels abdeckt und ein Teleskopieren des Wickels verhindert. Neuerungsgemäß wird die Bordscheibe nun zusätzlich dazu verwendet, einen Reibschluß-Eingriff mit der Stirnseitenwand zu ermöglichen. Dies hat den Vorteil, daß der Reibschluß-Eingriff mit einem großen jederzeit konstanten Radius erfolgen kann, ohne daß zu befürchten ist, daß mit abnehmendem Durchmesser des Wickels eine Arretierung des Wickels nicht mehr möglich ist. Weiterhin wird dadurch vermieden, daß durch die Berührung des Wickels durch die Stirnseitenwand eine Beschädigung des bahnförmigen Materials erfolgt.

Mit Vorteil weist die Bordscheibe einen in Axialrichtung nach außen weisenden umlaufenden Flansch auf, gegen den die Bremseinrichtung den Reibschluß erzeugt. Durch den Flansch wird die Bordscheibe verstärkt und setzt dem durch die Stirnseitenwand erzeugten Druck einen Widerstand entgegen, der den Reibschluß verbessert. Andererseits ist es nicht notwendig, die gesamte Bordscheibe in der Stärke des Flansches auszuführen, da dies Preis und Gewicht der Kassette erhöhen würde. Lediglich im Bereich des Flansches haben Bordscheibe und Stirnseitenwand einen relativ geringen Abstand zueinander, der durch die Bewegung der Stirnseitenwand aufgrund des durch die Bremseinrichtung aufgebrachten Drucks überbrückt werden muß.

Mit Vorteil ist der Flansch im Bereich des größten Durchmessers der Bordscheibe angeordnet. Dadurch wird bei konstantem Bremsdruck das größte Bremsmoment erzeugt.

Mit besonderem Vorteil weist die der Stirnseitenwand zugewandte Oberfläche des Flansches eine reibungserhöhende Struktur, insbesondere eine in Radialrichtung verlaufende Riffelung, auf. Für das gleiche Bremsmoment ist damit ein wesentlich geringerer Druck erforderlich.

Die Neuerung wird im folgenden anhand eines bevorzugten Ausführungsbeispiels in Verbindung mit der Zeichnung beschrieben. Darin zeigen:

Fig. 1     eine perspektivische Ansicht einer Kassette ohne eingesetzte Klemmelemente,

Fig. 2     eine Stirnseitenansicht der Kassette, teilweise im Aufbruch,

Fig. 3     einen Schnitt II-II nach Fig. 2 und

Fig. 4     eine Detailansicht aus Fig. 3.

Eine Kassette 1 weist ein Oberteil 2 und ein Unterteil 3 auf, die so zusammengefügt sind, daß ihre Trennfuge lichtdicht ist. Die Kassette 1 weist eine Gehäusewand 4, die durch Verstärkungsrippen 5 verstärkt ist, und zwei Stirnseitenwände 6, 7 auf, die durch die Gehäusewand 4 verbunden sind. Die Gehäusewand 4 umgibt den Umfang eines Wickels 8, der aus einem bahnförmigen Material 9, insbesondere einem lichtempfindlichen Film auf einen Pappkern 10 gewickelt ist. Das Material 9 und der Pappkern 10 haben die gleiche Breite. In den Pappkern 10 ist auf beiden Seiten ein Lagerflansch 11 eingesetzt, der mit einer Bordscheibe 12 verbunden ist. Die Bordscheibe stützt den Wickel 8 ab und verhindert so ein Teleskopieren des Filmes 9. Die Bordscheibe 12 verbindet außerdem den Lagerflansch 11 mit einem Lagerzapfen 13, der unter Zwischenlage einer Lagerbuchse 14 in einem aus zwei Lagerschalen 15, 16 gebildeten Lager gelagert ist. Der Wickel 8 kann sich dadurch in der Kassette 1 frei, d.h. reibungsarm drehen.

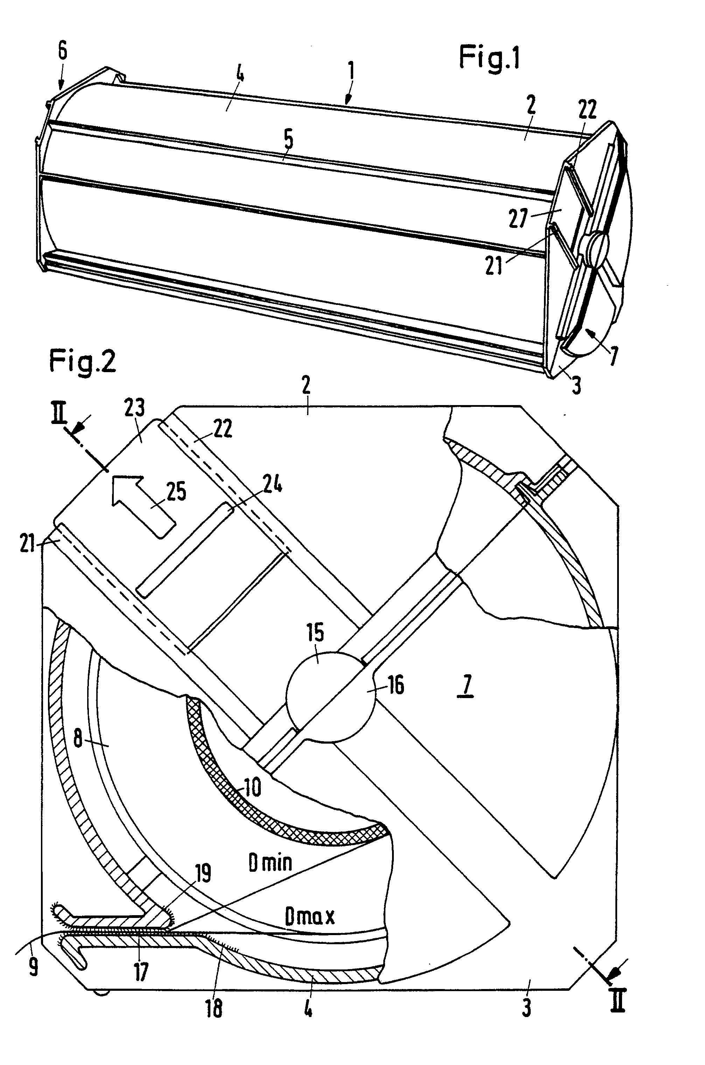

Das Material 9 ist durch einen zwischen Oberteil 2 und Unterteil 3 gebildeten Schlitz 17 geführt, der sich annähernd parallel zur Achse des Wickels 8 erstreckt. Beide Seiten des Schlitzes 17 sind mit einer Beschichtung 18, 19 aus Samt, Plüsch oder ähnlichem versehen, um den Schlitz 17 gegen Streulicht abzudichten und gleichzeitig eine Beschädigung des Filmes 9 durch Verkratzen oder ähnliches zu verhindern. In Fig. 2 ist der Verlauf des Filmes 9 für den maximalen Durchmesser $D_{max}$, d.h. bei vollbewickeltem Wickel 8, und bei minimalem Durchmesser $D_{min}$, d.h. bei vollständig abgewickeltem Wickel 8, dargestellt.

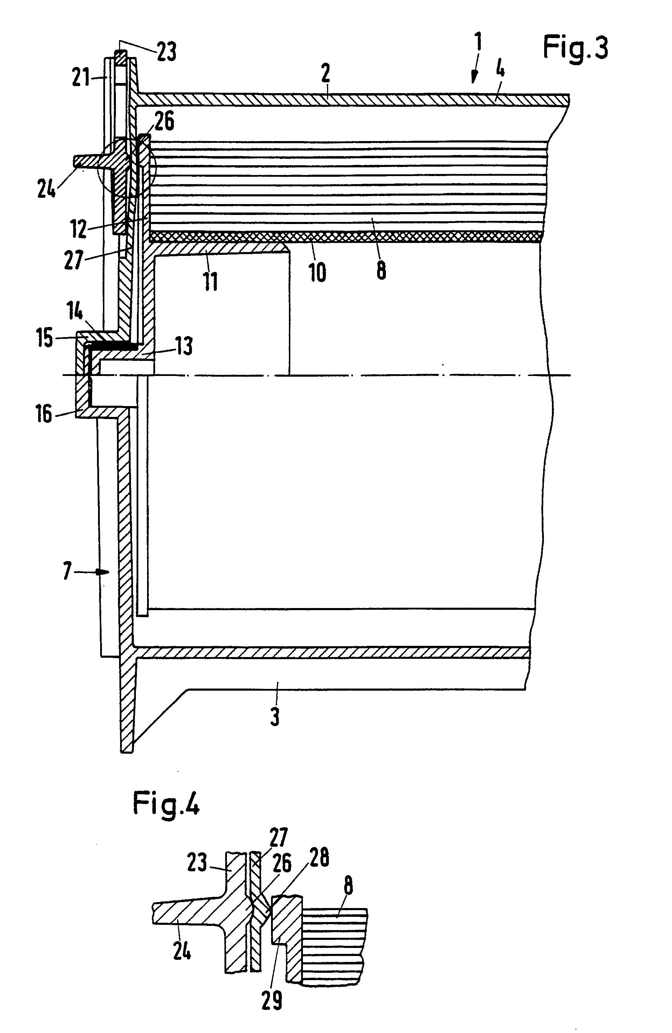

Auf beiden Stirnseiten 6, 7 sind zwei Schienen 21, 22 vorgesehen, die sich annähernd senkrecht zur Trennfuge zwischen dem Oberteil 2 und dem Unterteil 3 erstrecken. Die Schienen sind darin nur auf dem zum Oberteil 2 gehörigen Teil der Stirnseiten 6, 7 vorgesehen. In die Schienen 21, 22 ist ein Klemmelement 23 eingesetzt. Der Abstand zwischen der Schieneninnenseite und der jeweiligen Stirnseitenwand verringert sich mit abnehmender Entfernung zur Trennfuge zwischen dem Oberteil 2 und dem Unterteil 3. Das Klemmelement 23 weist einen Handgriff 24 und eine Markierung 25 auf, die anzeigt, in welche Richtung das Klemmelement zu bewegen ist, um die Arretierung des Wickels 8 aufzuheben. Auf der dem Handgriff 24 gegenüberliegenden Seite des Klemmelements 23 ist ein abgerundeter Vorsprung 26 angeordnet, der auf der Außenseite der Stirnseitenwand 7 gleitet. Bei Bewegung des Klemmelements 23 nach unten, d.h. in Richtung auf die Trennfuge zwischen Oberteil 2 und Unterteil 3 zu, wird durch die Schienen 21, 22 bewirkt, daß der Vorsprung 26 einen zunehmenden Druck auf die Wand der Stirnseitenelements 7, die einen Bereich 27 verminderter Stärke aufweist, ausübt und die Wand nach innen, d.h. auf die Stirnfläche des Wickels 8 zu bewegt. Das Klemmelement läßt sich bis zum Ende der Schienen 21, 22 in Richtung auf die Trennfuge in das Oberteil 2 hineinschieben. In dieser Position wird der Bereich verminderter Wandstärke 27 der Stirnseite 7 am weitesten in Richtung auf den Wickel 8 in das Innere der Kassette hineinbewegt. An dieser Stelle weist die Stirnseitenwand 7 eine Spitze 28 auf. Die Bordscheibe 12 weist an einem Radius, der dieser Spitze 28 gegenüberliegt, einen umlaufenden Flansch 29 auf. Durch das Hineinschieben des Klemmelements 23 in die Schienen 21, 22 wird also ein sehr intensiver Reibschluß der Stirnseitenwand 7 mit dem Wickel 8, genauer gesagt dessen Bordscheibe 12 aufgebaut. In der in Fig. 3 dargestellten Position verhindert also das Klemmelement 23 zuverlässig, daß sich der Wickel 8 dreht.

Die durch das Klemmelement 23 verursachte Spannung in der Stirnseitenwand beschränkt sich auf den Bereich 27 mit verminderter Wandstärke. Es ist nicht zu befürchten, daß sich das Oberteil 2 oder das Unterteil 3 verformt und dadurch die Trennfuge zwischen den beiden Teilen geöffnet wird. Damit wird sichergestellt, daß die Kassette 1 auch in blockierter Stellung lichtdicht ist.

Zum Lösen der Blockierung wird lediglich das Klemmelement 23 nach außen verschoben, beispielsweise solange, bis sich der Vorsprung 26 auf der Höhe der Gehäusewand 4 befindet. Das Klemmelement 23 kann auch ganz aus den Schienen 21, 22 entfernt werden. Um den Wickel 8 erneut zu arretieren, beispielsweise wenn eine teilentleerte Kassette 8 aus einem Belichtungsgerät entfernt werden soll, reicht es aus, das Klemmelement 23 wieder in die Schienen 21, 22 hinein zu schieben.

**Patentansprüche**

1.  Lichtdichte Kassette mit einem Wickel aus bahnförmigem Material, deren Gehäuse eine den Umfang des Wickels umgebende Gehäusewand und zwei durch die Gehäusewand verbundene Stirnseitenwände an den Stirnseiten aufweist, in denen der Wickel drehbar gelagert ist, dadurch gekennzeichnet, daß an mindestens einer Stirnseite (6, 7) der Kassette (1) eine von außen betätigbare Bremseinrichtung (23, 27, 29) angeordnet ist, die in einem vorbestimmten Winkelsegment einen verstellbaren Reibschluß zwischen der Stirnseitenwand (7) und der zugehörigen Stirnseitenfläche des Wickels (8) bewirkt.

2.  Kassette nach Anspruch 1, dadurch gekennzeichnet, daß die Bremseinrichtung (23, 27, 29) den Reibschluß in einem Bereich zwischen einem vorbestimmten ersten und einem vorbestimmten zweiten Radius an der Stirnseitenfläche bewirkt.

3.  Kassette nach Anspruch 1 oder 2, dadurch gekennzeichnet, daß das Gehäuse zweiteilig ausgebildet ist und ein Oberteil (2) und ein Unterteil (3) aufweist, wobei Oberteil (2) und Unterteil (3) jeweils einen Teil der Gehäusewand (4) und beider Stirnseitenflächen (6, 7) umfassen.

4.  Kassette nach Anspruch 3, dadurch gekennzeichnet, daß die Bremseinrichtung (23, 27) nur am Oberteil (2) bzw. nur am Unterteil (3) angeordnet ist.

5.  Kassette nach einem der Ansprüche 1 bis 4, dadurch gekennzeichnet, daß die Bremseinrichtung ein Klemmelement (23) aufweist, das in Schienen (21, 22) außen auf der Stirnseitenwand (6, 7) geführt ist und in einer vorbestimmten Lage einen zwischen den Schienen befindlichen Teil (27) der Stirnseitenwand (6, 7) mit Druck beaufschlagt und nach innen biegt.

6.  Kassette nach Anspruch 5, dadurch gekennzeichnet, daß die Stirnseitenwand (7) zwischen den Schienen (21, 22), insbesondere an dem Ort (27), wo sie durch das Klemmelement (23) mit Druck beaufschlagt wird, mit verminderter Wandstärke ausgebildet ist.

7.  Kassette nach Anspruch 5 oder 6, dadurch gekennzeichnet, daß die Stirnseitenwand (6, 7) auf ihrer Innenseite an dem Ort, wo sie durch das Klemmelement (23) mit Druck beaufschlagt wird, einen Vorsprung (28) aufweist.

8.  Kassette nach einem der Ansprüche 4 bis 7, dadurch gekennzeichnet, daß das Klemmelement (23) in eine Lage verschiebbar ist, in der es keinen Druck auf die Stirnseitenwand (6, 7) ausübt.

9.  Kassette nach einem der Ansprüche 1 bis 8, dadurch gekennzeichnet, daß der Wickel (8) zumindest auf der Seite, auf der die Bremseinrichtung angeordnet ist, eine Bordscheibe (12) aufweist.

10. Kassette nach Anspruch 9, dadurch gekennzeichnet, daß die Bordscheibe (12) einen in Axialrichtung nach außen weisenden umlaufenden Flansch (29) aufweist, gegen den die Bremseinrichtung den Reibschluß erzeugt.

11. Kassette nach Anspruch 10, dadurch gekennzeichnet, daß der Flansch (29) im Bereich des größten Durchmessers der Bordscheibe (12) angeordnet ist.

12. Kassette nach Anspruch 10 oder 11, dadurch gekennzeichnet, daß die der Stirnseitenwand zugewandte Oberfläche des Flansches (29) eine reibungserhöhende Struktur, insbesondere eine in Radialrichtung verlaufende Riffelung, aufweist.

Fig.1

6

4

1

5

2

22

27

21

7

3

Fig.2

II

23

22

2

25

24

21

15

16

7

8

10

Dmin

19

Dmax

9

17

18

4

3

II

Fig.3

Fig.4